# EUROPEAN PATENT APPLICATION

(11) **EP 4 246 409 A1**
(43) Date of publication of application: **20.09.2023**
(21) Application number: 22382240.4
(22) Date of filing: 14.03.2022
(51) Int. Cl.: G06Q 30/06, G06Q 50/18

(54) **METHOD, SYSTEM AND COMPUTER PROGRAMS FOR VALUE PRESERVATION OF DIGITAL ASSETS AMONG MEMBERS OF A DISTRIBUTED COMPUTING PLATFORM**

(71) Applicant: Universitat de Girona, 17003 Girona (ES)
(72) Inventor: DE LA ROSA ESTEVA, José Luis, 17007 Girona (ES); EL-FAKDI SENCIANES, Andres, 17003 Girona (ES); MUÑOZ SOLÀ, Víctor, 17244 Cassà de la Selva (ES)
(74) Representative: Torner, Juncosa I Associats, SL

(57) **Abstract**

A computer implemented method, a system and computer program for the value preservation of digital assets among members of a distributed computing platform are provided. The method comprises representing a digital asset to be preserved using a digital token, said digital token including a wallet, and said digital asset belonging to a first member; creating two entangled digital tokens, a first entangled digital token and a second entangled digital token, the two entangled digital tokens sharing their own wallet; and transferring either the created first entangled digital token or the created second digital token to a second member. Such that any digital transaction made with the wallet can be operated by any of said first and second members.

## Description

### Technical Field

The present invention is directed, in general, to the field of blockchain technology. In particular, the invention relates to a method, system and computer programs for value preservation of digital assets among members of a distributed computing platform.

In this document, by 'member' it should be understood users who have a wallet where they have or collect fungible and non-fungible tokens, and digital tokens and virtual currency.

The term "blockchain" as used herein includes all forms of electronic, computer-based, distributed ledgers, including transaction-chain technologies, consensus-based technologies, permissioned, un-permissioned and shared ledgers, etc.

### Background of the Invention

Blockchain digital assets such as digital pieces, games, art, etc. can be represented using digital tokens. An example of these digital tokens are non-fungible tokens (NFTs), for instance ERC 721, ERC 1155, ERC 998, etc. Tokens are typically stored in association with an electronic wallet.

### Description of the Invention

The object of the present invention is thus to provide a new technology/solution for the preservation of digital assets.

This object is fulfilled by a method with the characteristics of claim 1, a system with the features of claim 9 and by a computer program with the features of claim 15.

To that end the present invention proposes, according to one aspect, a method for the value preservation of digital assets among members of a distributed computing platform, the method comprising representing a digital asset to be preserved using a digital token, said digital token including a wallet, and said digital asset belonging to a first member; creating two entangled digital tokens, a first entangled digital token and a second entangled digital token, the two entangled digital tokens sharing said wallet; and transferring either the created first entangled digital token or the created second digital token to a second member. Such that any digital transaction made with the wallet can be operated by any one of said first and second members.

Present invention also proposes, according to another aspect, a system for the value preservation of digital assets among members of a distributed computing platform, the system comprising one or more processors configured by machine-readable instructions to represent a digital asset to be preserved using a digital token, said digital token including a wallet, and said digital asset belonging to a first member; create two entangled digital tokens, a first entangled digital token and a second entangled digital token, the two entangled digital tokens sharing said wallet; transfer either the created first entangled digital token or the created second digital token to a second member. Such that any digital transaction made with the wallet can be operated by any of said first and second members.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Particularly, the digital token and the two entangled digital tokens are configured as a non-fungible token (NFT).

In some embodiments, the second entangled digital token has an electronic address that is complement to an address of the first entangled digital token. Particularly, the address of the first entangled digital token is randomly generated.

In some embodiments, the transferring step is made only once.

In some embodiments, the digital asset is represented on-demand of the first member.

In some embodiments, the two entangled digital tokens are minted on one smart contract.

In some embodiments, the distributed computing platform is a Distributed Blockchain Ledger. In an embodiment, the Ethereum blockchain is used. The features of the invention can be implemented via other DLTs and/or using other protocols, for example, Polkadot, EOS, Solana, Binance smart chain, Stellar, Ontra, Hedera, Tezos, Tron, Stratis, NEM, Waves, NEO, Chainlink, Corda, Algorand, Hyperledger Fabrik, etc.

Thus, present invention can be seen implemented as digital tokens (e.g. a non-fungible token NFT) with an (electronic) wallet and just 2 tokens supply, which are the entangled tokens that may be transferred one to one member and the other one to another member. Whatever asset any of the two members transfer to the wallet of their respective entangled token they own in her respective member's wallet then the entangled token has it too. That is, changes in the state of the wallet of a token are actuated on the wallet of its entangled token. Particularly, changes are made by means of transfers of fungible or non-fungible tokens at any amount to and from the wallet of the entangled tokens

### Description of the Drawings

The previous and other advantages and features will be more fully understood from the following detailed description of embodiments, with reference to the attached figures, which must be considered in an illustrative and non-limiting manner, in which:

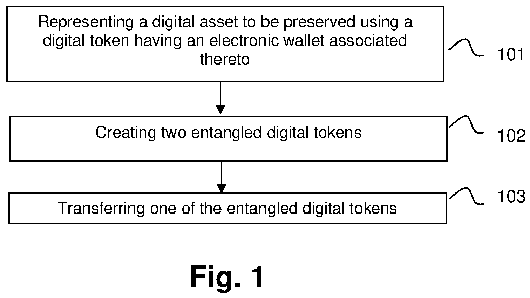

Fig. 1 is a flow diagram of an example embodiment of a computer-implemented method for value preservation of digital assets among members of a distributed computing platform.

### Detailed Description of Preferred Embodiments

Present invention provides a new solution for the process of granting resources to value preservation for the long term, by democratizing the access to preservation funding and creating bonds so that the ones who help are getting benefits from the digital assets being preserved.

A first embodiment of the invention is disclosed herein with reference to FIG. 1. The computer implemented method of this embodiment, at step 101, represents a digital asset, which belongs to a given member of a DLT platform and whose value has to be preserved, using a digital token comprising a wallet. At step 102, the method creates two entangled digital tokens (i.e. two tokens of the same type that are interconnected and that share a same wallet; therefore, whatever changes the state of one of the entangled tokens also affects the other entangled token). Then, at step 103, the method transfers one of the entangled digital tokens to another member of the DLT platform.

Particularly, the digital token, and the two entangled digital tokens, are non-fungible tokens (NFT). For example, ERC721 tokens, among others. The token owners have access to the contract wallet.

In some embodiments, the creation of the two entangled digital tokens is made using an object-oriented language for implementing smart contracts, such as Solidity, among others. Initially both minted tokens belong to the contract creator, but they can be transferred normally as any other NFT, so that they may belong to different members. The two members owning tokens can operate with the contract wallets. Therefore, the contract wallet (which may contain balances in several tokens) is "entangled" with both users. If a user makes some transfer, automatically the other user "sees" it. In some embodiments, the token owner is an Ethereum address, consequently token owners can be other smart contracts as well, for instance, other NFTs with wallet.

Following, some uses cases for implementation of the present invention are detailed.

In a first use case, the digital asset to be preserved comprises a digital piece of art. In this case, the artist/creator creates the digital piece of art with an NFT having a wallet. Then, the artist/creator creates, via a computer implemented software application or via a computing system, two entangled tokens (in the following referred as A and A̅). The artist/creator can keep A and transfer A̅ to another member. A possible construction of entangled tokens is that only one transfer is possible for them, thus the artist proofs he's been the creator of the digital piece of art by sending a transaction to A that is visible from A̅. Otherwise, the second member might check the authenticity of the artist by sending a transaction to A̅ so that the artist might proof by showing the outcome out of A.

An alternative to the previous use case is when the artist/creator and its creation in the form of a digital token with wallet creates and transfers an entangled token A to a second member, and the artist/creator member keeps the entangled token A̅.

In both cases it is advisable that the entangled tokens cannot be re-transferred, that means that only once can be transferred from their supply to the definite wallet.

There is possibility that the two entangled tokens had complement addresses. For instance, one entangled digital token A had an address, for example in 16-bit hex A2F1 (1010001011110001), and being A̅ its entangled digital token its address would be the complement of A, in this example it would be 5D0F (101110100001111):
Then, the two addresses are entangled, that means whatever token is stored in one address A it is visible and transactable in A̅ and vice versa.

In some embodiments, the address of A is generated randomly being A̅ its complement. Being A random, A̅ it is random as well, only that P(A̅|A) = 1. The8f1d entangled addresses must follow the rule of the conditional probability P(A̅|A) = 1.

Following an example of using entangled tokens is detailed. In this example, a 16-bit hexadecimal address (of 4 hex digits) is used for the wallets of users, the artcrafts NFT, and the entangled NFT.

Users:
- A (9630) (artist) that will own an NFT with the artcraft of its creation. It owns 5 ETH as well.
- B (6182) (art buyer) that owns nothing.
- C (1748) (a third user) that owns nothing.

NFT with a wallet
- R (4919) (buyer art craft)

Smart contract of an entangled token:
- EntangledToken (8F1D)

EntagledTokens minting of two tokens:
- T1 (token 1 of EntangledToken N1). Its wallet is T1 (8F1D)
- T2 (token 2 of EntangledToken de N1). Its wallet is T2 (8F1D), the same wallet as T1 (in some implementations it might be its complement address 70E3, but in this example will go on with the same 8F1D address)

The EntangledToken smart contract is executed by user A, thus he will be the first owner of the two minted EntangledTokens
- A (9630) contains R, T1 and T2, that means that A is the owner of R and as well of T1 and T2

In a first step (Step 1), the second EntangledToken T2 is transferred to R. Thus, the owners of said EntangledTokens are now A (9630) that contains R, T1, then A is the owner of R and T1R (4919) contains T2, then R is the owner of T2.

In a second step (Step 2) the artcraft is transferred from A to B, the owner now is:
- B (6182) contains R, then B is the owner of R.
- A (9630) contains T1, then A is the owner T1.

In a third step (Step 3) a well-known fungible token ETH is transferred. For example, 100 ETH are transferred to T1 (8F1D). Hence, T1 (8F1D) contains 100 ETH.

In a fourth step (Step 4) it is checked if A can spend any amount, for example, 10 ETH of T1 (this is because A owns T1) and A sends them to C (17A8). The new balances in their wallets will then be:
- T1 (8F1D) contains 90 ETH.
- C (1748) contains 10 ETH.
- T2 (8F1D) contains 90 ETH, as well.

In a fifth step (Step 5) it is checked if R can transfer 10 more ETH from T2 (it can because R owns T2) and send them to C too. Then:
- T2 (8F1D) contains 80 ETH.
- C (1748) contains 20 ETH.
- T1 (8F1D) contains 80 ETH as well.

In a sixth step (Step 6) it is supposed that if instead of sending ETH to C it was A sending it to R through the entangled tokens, then the entangled tokens are used to send 5 ETH from A to T1:
- T1 (8F1D) contains 85 ETH.
- A (9630) contains 0 ETH.
- T2 (8F1D) contains 85 ETH, as well.
- B (6182) contains R, nothing more.
- R (4919) contains T2, nothing more.

Thus, the two EntangledTokens T1 and T2 have increased their balance. This new balance is visible and accessible to R, and to B as explained in former steps.

In a seventh step (Step 7), B sends the balance back. To do so, it can use the 5 ETH of T2 as B is the owner of R which in its turn is the owner of T2. The final state will be.
- T2 (8F1D) contains 80 ETH.
- A (9630) contains 5 ETH.
- T1 (8F1D) contains 80 ETH, as well.
- B (6182) contains R, nothing more.
- R (4919) contains T2, nothing more.

In a final step (Step 8), if an external user like C wants to add funds to the art craft R, (s)he can do it in several ways, by transferring funds to R (4919) or to its Entangled Token T2 (8F1D).

In the example, the owners had full access to the balance in the NFT and Entangled Tokens they owned but other rules might be conceived to limit such a power and develop rules of engagement, royalties, and value and digital preservation.

Various aspects of the proposed method, as described herein, may be embodied in programming. Program aspects of the technology may be thought of as "products" or "articles of manufacture" typically in the form of executable code and/or associated data that is carried on or embodied in a type of machine readable medium. Tangible non-transitory "storage" type media include any or all of the memory or other storage for the computers, processors, or the like, or associated modules thereof, such as various semiconductor memories, tape drives, disk drives and the like, which may provide storage at any time for the software programming.

All or portions of the software may at times be communicated through a network such as the Internet or various other telecommunication networks. Such communications, for example, may enable loading of the software from one computer or processor into another, for example, from a management server or host computer of a scheduling system into the hardware platform(s) of a computing environment or other system implementing a computing environment or similar functionalities in connection with image processing. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to tangible "storage" media, terms such as computer or machine "readable medium" refer to any medium that participates in providing instructions to a processor for execution.

A machine-readable medium may take many forms, including but not limited to, a tangible storage medium, a carrier wave medium or physical transmission medium. Non-volatile storage media include, for example, optical or magnetic disks, such as any of the storage devices in any computer(s), or the like, which may be used to implement the system or any of its components shown in the drawings. Volatile storage media may include dynamic memory, such as a main memory of such a computer platform. Tangible transmission media may include coaxial cables; copper wire and fiber optics, including the wires that form a bus within a computer system. Carrier-wave transmission media may take the form of electric or electromagnetic signals, or acoustic or light waves such as those generated during radio frequency (RF) and infrared (IR) data communications. Common forms of computer-readable media may include, for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a physical processor for execution.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, image processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. The topic of the present disclosure may be achieved in various forms and embodiments, and the present disclosure may be further used in a variety of application programs. All applications, modifications and alterations required to be protected in the claims may be within the protection scope of the present disclosure.

The scope of the present invention is defined in the following set of claims.

## Claims

1. A computer implemented method for the value preservation of digital assets among members of a distributed computing platform, the method comprising:
representing a digital asset to be preserved using a digital token, said digital token including a wallet, and said digital asset belonging to a first member;
creating two entangled digital tokens, a first entangled digital token and a second entangled digital token, the two entangled digital tokens sharing said wallet;
transferring either the created first entangled digital token or the created second digital token to a second member,
such that any digital transaction made with the wallet can be operated by any one of said first and second members.

2. The method of claim 1, wherein the digital token and the two entangled digital tokens are configured as a non-fungible token.

3. The method of any one of the previous claims, wherein the second entangled digital token comprises an electronic address that is complement to an address of the first entangled digital token.

4. The method of claim 3, wherein the address of the first entangled digital token is randomly generated.

5. The method of any one of the previous claims, wherein the transferring step is made only once.

6. The method of any one of the previous claims, wherein the digital asset is represented on-demand of the first member, and wherein the two entangled digital tokens are minted on one smart contract.

7. The method of any one of the previous claims, wherein the distributed computing platform is a Distributed Ledger.

8. The method of claim 7, wherein the distributed ledger comprises one of: Ethereum, Polkadot, EOS, Solana, Binance smart chain, Stellar, Ontra, Hedera, Tezos, Tron, Stratis, NEM, Waves, NEO, Chainlink, Corda, Algorand, or Hyperledger Fabrik.

9. A system for the value preservation of digital assets among members of a distributed computing platform, the system comprising one or more processors configured by machine-readable instructions to:
represent a digital asset to be preserved using a digital token, said digital token including a wallet, and said digital asset belonging to a first member;
create two entangled digital tokens, a first entangled digital token and a second entangled digital token, the two entangled digital tokens sharing said wallet;
transfer either the created first entangled digital token or the created second digital token to a second member,
such that any digital transaction made with the wallet can be operated by any one of said first and second members.

10. The system of claim 9, wherein the distributed computing platform is a Distributed Ledger.

11. The system of claim 9 or 10, wherein the digital token and the two entangled digital tokens are configured as a non-fungible token.

12. The system of any one of claims 9-11, wherein the second entangled digital token comprises an electronic address that is complement to an address of the first entangled digital token.

13. The system of claim 12, wherein the address of the first entangled digital token is randomly generated.

14. The system of any one of the claims 9-13, comprising a smart contract configured to mint the two entangled digital tokens.

15. A non-transitory computer readable medium comprising a computer program adapted to implement the methods of claims 1 to 8.
